# EUROPÄISCHE PATENTANMELDUNG

(11) **EP 1 122 124 A1**
(43) Veröffentlichungstag der Anmeldung: **08.08.2001**
(21) Anmeldenummer: 01100182.3
(22) Anmeldetag: 17.01.2001
(51) Int. Cl.: B60N 2/58

(54) **Gepolsterter Fahrzeugsitz**

(30) Priorität: 18.01.2000 DE 20000739 U
(71) Anmelder: Johnson Controls GmbH, 51399 Burscheid (DE)
(72) Erfinder: Stoschek, Olaf, 96317 Kronach (DE)
(74) Vertreter: Patentanwälte Dr. Solf & Zapf

(57) **Zusammenfassung**

Die Erfindung betrifft einen Fahrzeugsitz mit mindestens einem als Sitzrahmen bzw. Rückenlehnenrahmen ausgebildeten Rahmenteil (1) und mindestens einem mit dem Rahmenteil (1) lösbar verbundenen Polsterteil (2). Zum lösbaren Befestigen des Polsterteils (2) an dem Rahmenteil (1) ist eine Befestigungsvorrichtung (4) vorgesehen, die aus einer gitterförmigen, in einer zur Polsterfläche des Polsterteils (2) etwa parallelen Montageebene angeordneten Matte (6), mehreren an der Matte (6) gehalterten Klemmelementen (10) sowie mindestens zwei Profilstegelementen (8) besteht, wobei die Klemmelemente (10) jeweils durch die Matte (6) hindurch mit einem der Profilstegelemente (8) so verbunden sind, dass die Matte (6) zwischen dem jeweiligen Klemmelement (10) und dem Profilstegelement (8) klemmend gehalten ist, und wobei die Halterung der Matte (6) über die Profilstegelemente (8) erfolgt. Bevorzugt ist die Matte (6) über die Profilstegelemente (8) an dem Rahmenteil (1) aufgehängt, wobei das Polsterteil (2) mit den Klemmelementen (10) verrastbar ist.

## Beschreibung

Die vorliegende Erfindung betrifft einen Fahrzeugsitz mit mindestens einem als Sitzrahmen bzw. Rückenlehnenrahmen ausgebildeten Rahmenteil und mindestens einem mit dem Rahmenteil lösbar verbundenen Polsterteil.

Die Autoindustrie sucht immer wieder nach Wegen, das Innenleben der Fahrzeuge so abwechslungsreich wie möglich zu gestalten. Beispielsweise soll ein Fahrzeugkäufer die Möglichkeit haben, Farbe und/oder Material seiner Inneneinrichtungskomponenten, wie insbesondere der Fahrzeugsitze, selbst auszuwählen und bei Bedarf auch noch später zu ändern.

Sitze der genannten Art mit lösbaren und somit auswechselbaren Polsterteilen sind beispielsweise in den Dokumenten DE-A-43 38 881, DE-A-197 51 091, US-A-3 861 747 und FR-A-2 769 553 beschrieben.

Der vorliegenden Erfindung liegt die Aufgabe zugrunde, einen konstruktiv einfachen und preisgünstigen Fahrzeugsitz zu schaffen, bei dem Polsterteile mit hoher Anwendungsvariabilität durch den Sitzhersteller montiert sowie jederzeit problemlos auch durch den Fahrzeugbesitzer selbst ausgetauscht werden können.

Erfindungsgemäss wird dies durch die kennzeichnenden Merkmale des Anspruchs 1 erreicht.

Die an einem erfindungsgemäßen Fahrzeugsitz lösbar befestigbaren Polsterteile sind mittels der speziellen, erfindungsgemäßen Befestigungsvorrichtung problemlos montierbar und austauschbar. Vorzugsweise wird die Befestigungsvorrichtung in die Rückenlehne und/oder in die Sitzfläche eines Fahrzeugsitzes eingesetzt, alternativ wäre aber auch eine "kinematisch umgekehrte" Anordnung der Vorrichtung jeweils in den zu lösenden Polsterteilen selbst möglich. Ein Austausch von Polsterteilen vorzugsweise in den Bereichen der sogenannten Sitz- und/oder Lehnenspiegel, also den jeweils mittigen Bereichen, die die Rückenanlage in der Rückenlehne bzw. die Gesässauflage in der Sitzfläche des Sitzkissens bilden, ist deshalb besonders sinnvoll, weil diese Flächen besonders stark beansprucht werden. Der Fahrzeugbesitzer hat somit nicht nur die Möglichkeit, das Innenleben seines Fahrzeuges farblich und/oder bezüglich des Bezugmaterials zu variieren, sondern kann auch einen Austausch einzelner Polsterteile aufgrund von Verschleiss oder Verschmutzung vornehmen. Die Klemmelemente können über die Profilstegelemente vorteilhafterweise an nahezu beliebigen Stellen der Montageebene angeordnet werden, was zu der angestrebten hohen Anwendungsvariabilität für verschiedenartige Sitze führt.

Weitere vorteilhafte Ausgestaltungsmerkmale und Vorteile der Erfindung sind in der Beschreibung und in den Unteransprüchen enthalten.

Anhand eines bevorzugten, in den beiliegenden Zeichnungen dargestellten Ausführungsbeispieles wird die Erfindung näher erläutert. Dabei zeigen:
- Fig. 1: eine Draufsicht auf einen Rückenlehnenrahmen mit einer daran befestigten erfindungsgemässen Befestigungsvorrichtung für eine lösbare Befestigung eines Polsterteils,
- Fig. 2: einen vergrößerten Querschnitt (Schnittebene II-II in Fig. 1) eines elastischen Profilstegelementes der erfindungsgemässen Befestigungsvorrichtung,
- Fig. 3: eine perspektivische Seitenansicht des in Fig. 1 ausgewiesenen Bereiches A,
- Fig. 4: eine perspektivische Darstellung eines Teilbereiches eines mit der in Fig. 1 dargestellten erfindungsgemässen Befestigungsvorrichtung verbindbaren Polsterteils (Bereich B in Fig. 1).

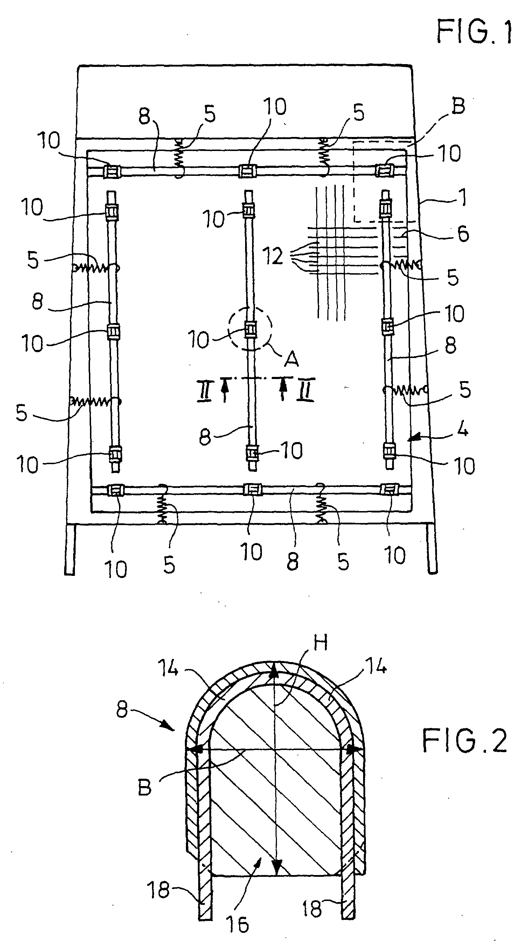

Ein erfindungsgemäßer Fahrzeugsitz weist in der Regel zwei einerseits als Sitzrahmen und andererseits als Rückenlehnenrahmen ausgebildete Rahmenteile 1 auf. In Fig. 1 ist beispielhaft nur ein Rückenlehnen - Rahmenteil 1 dargestellt. Das bzw. jedes Rahmenteil 1 ist mit mindestens einem Polsterteil 2 lösbar verbunden. Vorzugsweise sind die Polsterteile 2 als Polstersegmente gebildet, die den sogenannten Rückenlehnen- bzw. Sitzflächenspiegel der gesamten Sitzpolsterung bilden.

In Fig. 1 ist eine Draufsicht auf das Rückenlehnen- Rahmenteil 1 mit einer daran angeordneten erfindungsgemäßen Befestigungsvorrichtung 4 dargestellt. Die Befestigung am Rahmenteil 1 erfolgt beispielsweise - wie hier dargestellt - durch Aufhängen über Zug- Federelemente 5, es können aber auch Stangen, Drähte oder Seile verwendet werden. Auf die im Fahrzeugsitz installierte Befestigungsvorrichtung 4 kann das lösbar durch Verrasten zu befestigende Polsterteil 2 auch durch den Fahrzeugbesitzer selbst problemlos aufgedrückt bzw. entfernt werden. Die übrige Polsterung der Rückenlehne bzw. der Sitzfläche weist zu diesem Zweck eine den Abmessungen des Polsterteils 2 angepaßte Ausnehmung auf, in die das lösbare Polsterteil 2 passgenau eingesetzt werden kann (nicht dargestellt).

Die Befestigungsvorrichtung 4 besteht aus einer gitterförmigen Matte 6, länglichen und vorzugsweise elastischen Profilstegelementen 8 und mit den letzteren durch die Matte 6 hindurch verbundenen Klemmelementen 10. Die Matte 6 wird bevorzugt am Rahmenteil 1 so aufgehängt, dass sie in einer zur Fläche des (befestigten) Polsterteils 2 im Wesentlichen parallelen Montageebene liegt. Gemäß Fig. 1 sind dazu die Federelemente 5 jeweils unmittelbar zwischen dem Rahmenteil 1 und einem der Profilstegelemente 8 eingehängt. Die Matte 6 besteht vorzugsweise aus einem Glasfasergittergewebe mit quadratischen Gitterfenstern 12. Eine Länge der Seitenkanten der Gitterfenster 12 von etwa 5 mm hat sich als vorteilhaft hinsichtlich der Stabilität und Reißfestigkeit der gitterförmigen Matte 6 erwiesen, jedoch sind auch kürzere oder längere Seitenkanten denkbar. Je nach Anforderung sind weiterhin auch andersartige, beispielsweise wabenförmige, runde oder rechteckige Gitterfenster 12 möglich. Die Matte 6 kann alternativ zu dem genannten Glasfasermaterial auch aus einem Kunststoff- oder Metallmaterial sowie aus natürlichen Fasern bestehen.

Als vorteilhaft hat sich eine Anordnung der elastischen Profilstegelemente 8 jeweils in Aussenrandbereichen der gitterförmigen Matte 6 erwiesen. Es können etwa zwei parallel gegenüberliegende Profilstegelemente 8 zum trampolinartig elastisch in der Montageebene gespannten Aufhängen der Matte 6 ausreichen, vorzugsweise ist aber - wie in Fig. 1 dargestellt - in jedem der vier Randbereiche der Matte 6 eines von vier Profilstegelementen 8 angeordnet. Weitere Profilstegelemente 8 können auch über die Fläche der Matte 6 verteilt angeordnet sein. Jedes Profilstegelement 8 ist durch die Matte 6 hindurch mit jeweils vorzugsweise drei Klemmelementen 10 verbunden, wobei jeweils ein Klemmelement 10 etwa in der Mitte und jeweils zwei Klemmelemente 10 etwa in den Endbereichen des Profilstegelementes 8 angeordnet sind.

Die Profilstegelemente 8 werden vorzugsweise durch sogenannte "Softstrip-Elemente" gebildet. Derartige, in Fig. 2 im Querschnitt dargestellte "Softstrip-Elemente" bestehen aus einem umschäumten, vorzugsweise einem mit Polyurethan umschäumten, grobmaschigen Trägerprofil 14, insbesondere einem textilen Flächengebilde. Das Trägerprofil 14 ist in einen Schaumgrundkörper 16 eingebettet. Dieser besteht vorzugsweise aus einem Polyurethan-Heißschaum oder Polyurethan-Kaltschaum. Rohdichtewerte des Schaumgrundkörpers 16 von etwa 75 bis 100 kg/m³ haben sich als günstig erwiesen. Das textile Flächengebilde kann in Form eines Gewebes oder eines Vlieses vorliegen und beispielsweise aus einem Kunststoff aber auch aus natürlichen Fasern bestehen. Für eine gute Penetration des Schaumes und eine gute Einbindung des Trägerprofils 14 in den Schaumgrundkörper 16 ist es dabei von Vorteil, wenn das textile Flächengebilde ein Flächengewicht von etwa 50 bis 100 g/m², vorzugsweise von etwa 65 bis 85 g/m² aufweist. Gute Ergebnisse wurden mit einem Polyurethan-Kaltschaum mit einer Rohdichte von 85 bis 90 kg/m³ erreicht, in den als Trägerprofil 14 ein Polypropylen-Gewebe mit einer Flächendichte von ca. 75 g/m² eingebettet ist. Das textile, insbesondere bandförmige Flächengebilde ist dabei, zumindest bereichsweise, in einem Randbereich des elastischen Steges 8 angeordnet und im Querschnitt des Profilstegelementes 8 gesehen U-förmig ausgebildet. Diese erfindungsgemäße Anordnung ist hinsichtlich der Stabilität des Elementes 8 und der Einbindung des Trägerprofils 14 ausgesprochen günstig. Die Enden 18 der U-Schenkel stehen aus der Umschäumung (Schaumgrundkörper 16) hervor. Die Grundabmessungen (Höhe H, Breite B) des etwa rechteckigen, jedoch Verrundungen aufweisenden Querschnitts des Schaumgrundkörpers 16 des Profilstegelementes 8 liegen im Bereich von etwa 5 bis 15 mm.

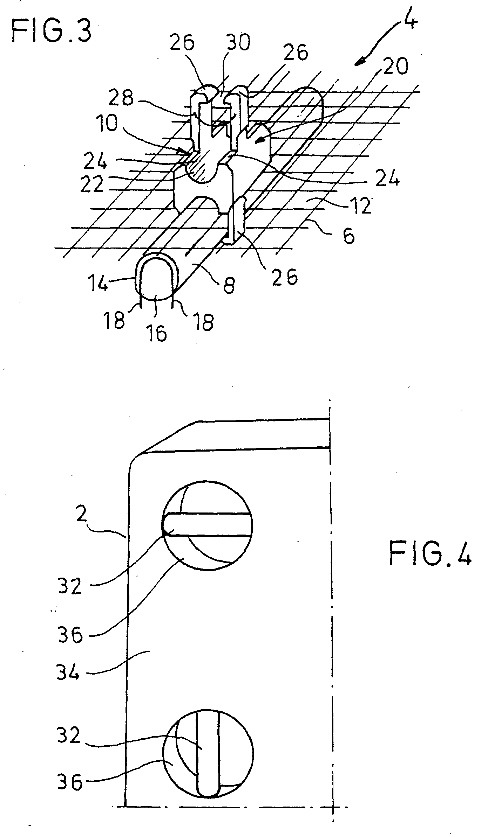

Aus Fig. 3, einer perspektivischen Seitenansicht des in Fig. 1 ausgewiesenen Bereiches A, ist unter anderem die Form und Anordnung der erfindungsgemäßen Klemmelemente 10 zu entnehmen. Ein solches Klemmelement 10 weist ein etwa quaderförmiges Basisteil 20 auf, das in seiner Längsausdehnung an seinen beiden breiteren Seiten jeweils eine halbkreisförmige Ausnehmung 22 über seine gesamte Länge aufweist. Die Grundfläche des Basisteils 20 ist sowohl breiter als auch länger als die Seitenkanten eines Gitterfensters 12. An den Seitenflanken 24 der halbkreisförmigen Ausnehmungen 22 ist jeweils ein Klammerschenkel 26, der in Längsrichtung des Basisteils 20 eine geringere Breite als das Basisteil 20 aufweist, mittig angeordnet. Jeweils zwei einander gegenüberliegende Klammerschenkel 26 bilden eine Rastklammer 28. Dementsprechend sind an dem Basisteil 20 zwei gleichartige Rastklammern 28 angeordnet, deren Klammeröffnungen 30 in entgegengesetzte Richtungen weisen. Eine Rastklammer des Halteelementes 10 erstreckt sich durch ein Gitterfenster 12 und ist auf der dem Basisteil 20 des Halteelementes 10 gegenüberliegenden Seite der Matte 6 mit einem der Profilstegelemente 8 verbunden, insbesondere formschlüssig oder kraftformschlüssig verrastet, wodurch die Matte 6 zwischen dem Profilstegelement 8 und dem Klemmelement 10 bzw. dessen Basisteil 20 formschlüssig eingeklemmt gehalten ist. Die erfindungsgemäßen Klemmelemente 10 können vorteilhafterweise an jeder beliebigen Stelle der Matte 6 durch ein Gitterfenster 12 hindurch eingesetzt werden. Hieraus resultiert, dass auch die Profilstegelemente 8 beliebig angeordnet sein können. Daraus resultiert vorteilhafterweise eine hohe Anwendungsvariabilität der erfindungsgemäßen Befestigungsvorrichtung 4, die mit gleichartigen Bauteilen für verschiedene Sitze verwendet werden kann. Die Befestigungsvorrichtung 4 wird vorzugsweise derart in den Fahrzeugsitz eingesetzt, dass die Profilstegelemente 8 dem Fahrzeugsitz zugewandt sind.

Fig. 4 zeigt die im Polsterteil 2 angeordneten Haltemittel, die auf die Rastklammern 28 aufgedrückt werden können. Dargestellt ist der Bereich des Polsterteils 2, der auf die in Fig.1 im Bereich B dargestellten Klemmelemente 10 aufgerastet wird. Es hat sich als vorteilhaft erwiesen, als Haltemittel Verstrebungen 32 aus Kunststoff oder Metall in einem Schaumkörper 34 des lösbaren Polsterteils 2 einzuschäumen. In den Bereichen, in denen eine Verstrebung 32 mit einem Klemmelement 10 verrastet wird, ist die Verstrebung 32 bereichsweise nicht umschäumt. Die so ausgebildeten kanalartigen Ausnehmungen 36 wirken zusätzlich als Führungskanäle, damit beim Aufdrücken des Polsterteils 2 auf die Befestigungsvorrichtung 4 ein einwandfreies Einrasten der Verstrebungen 32 in die Rastklammern 28 der Klemmelemente 10 gewährleistet ist.

Da die Anordnung der elastischen Profilstegelemente 8 und der Klemmelemente 10 sowie die Abmessungen der Matte 6 beliebig wählbar sind, kann die Befestigungsvorrichtung 4 individuell verschiedenen Anforderungen angepaßt werden. Die Gitterstruktur der Matte 6 gewährleistet die notwendige Belüftung des eingesetzten Polsterteils 2. Die Befestigungsvorrichtung 4 hat neben den genannten Vorzügen außerdem den Vorteil, dass sie, je nach Anordnung, eine zusätzliche federnde Wirkung haben kann. Die erfindungsgemäße Befestigungsvorrichtung ist darüber hinaus einfach konstruiert, wodurch nur geringe Herstellungskosten, auch aufgrund des verhältnismäßig geringen Materialaufwandes, entstehen.

Zweckmäßigerweise sind die auch die Matte 6 haltenden Rastverbindungen zwischen den Klemmelementen 10 und den Profilstegelementen 8 fester, d. h. schwerer (oder gar nicht) lösbar als die Rastverbindungen zwischen den Klemmelementen 10 und den Haltemitteln (Verstrebungen 32) des Polsterteils 2. Dadurch ist sichergestellt, dass beim Lösen (Abziehen) des Polsterteils 2 die Befestigungsvorrichtung 4 unverändert montiert bleibt und nicht etwa zumindest ein Teil der Klemmelemente 10 von den Profilstegelementen 8 gelöst werden.

Die Erfindung ist nicht auf das dargestellte und beschriebene Ausführungsbeispiel beschränkt, sondern umfasst auch alle im Sinne der Erfindung gleichwirkenden Ausführungen.Beispielsweise eignen sich elastische "Softstrip-Elemente" besonders gut als Profilstegelemente 8, weil die Verbindung gitterförmige Matte 6 und "Softstrip-Elemente" eine gewisse Flexibilität mit gleichzeitigem Federeffekt gewährleistet. Trotzdem können statt dessen auch PVC- oder PP- oder andere Hohl- oder Vollkörper, ebenfalls Federelemente aus Stahl, verwendet werden. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruches 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für die Erfindung zu verstehen.

## Patentansprüche

1. Fahrzeugsitz mit mindestens einem als Sitzrahmen bzw. Rückenlehnenrahmen ausgebildeten Rahmenteil (1) und mindestens einem mit dem Rahmenteil (1) lösbar verbundenen Polsterteil (2),
**dadurch gekennzeichnet, dass** zum lösbaren Befestigen des Polsterteils (2) an dem Rahmenteil (1) eine Befestigungsvorrichtung (4) vorgesehen ist, die aus einer gitterförmigen, in einer zur Polsterfläche des Polsterteils (2) etwa parallelen Montageebene angeordneten Matte (6), mehreren an der Matte (6) gehalterten Klemmelementen (10) sowie mindestens zwei Profilstegelementen (8) besteht, wobei die Klemmelemente (10) jeweils durch die Matte (6) hindurch mit einem der Profilstegelemente (8) so verbunden sind, dass die Matte (6) zwischen dem jeweiligen Klemmelement (10) und dem Profilstegelement (8) klemmend gehalten ist, und wobei die Halterung der Matte (6) über die Profilstegelemente (8) erfolgt.

2. Fahrzeugsitz nach Anspruch 1,
**dadurch gekennzeichnet, dass** die Matte (6) über die Profilstegelemente (8) mit dem Rahmenteil (1) verbunden ist, wobei das Polsterteil (2) mit den Klemmelementen (10) verrastbar ist.

3. Fahrzeugsitz nach Anspruch 1 oder 2,
**dadurch gekennzeichnet, dass** das Polsterteil (2) ein Polstersegment, insbesondere einen sogenannten Rückenlehnen- oder Sitzflächenspiegel, einer Sitzpolsterung bildet.

4. Fahrzeugsitz nach einem der Ansprüche 1 bis 3,
**dadurch gekennzeichnet**, dass jedes Klemmelement (10) zwei über ein Basisteil (20) miteinander verbundene, in entgegengesetzte Richtung geöffnete Rastklammern (28) aufweist.

5. Fahrzeugsitz nach Anspruch 4,
**dadurch gekennzeichnet,** dass jedes Klemmelement (10) derart ausgeführt ist, dass die Abmessungen des Basisteils (20) die Abmessungen eines Gitterfensters (12) der gitterförmigen Matte (6) allseitig übersteigen.

6. Fahrzeugsitz nach Anspruch 4 oder 5,
**dadurch gekennzeichnet**, dass sich jeweils eine der Rastklammern (28) jedes Klemmelementes (10) durch die gitterförmige Matte (6) hindurch erstreckt.

7. Fahrzeugsitz nach einem der Ansprüche 4 bis 6,
**dadurch gekennzeichnet**, dass jede Profilstegelement (8) auf der dem Fahrzeugsitz zugewandten Seite der Befestigungsvorrichtung (4) mit der sich durch die Matte (6) hindurch erstreckenden Rastklammer (28) des jeweiligen Klemmelementes (10) form- oder kraftformschlüssig verrastet ist.

8. Fahrzeugsitz nach einem der Ansprüche 1 bis 7,
**dadurch gekennzeichnet**, dass sich die Profilstegelemente (8) vorzugsweise in Randbereichen der Matte (6) jeweils über etwa die gesamte Breite bzw. Länge der gitterförmigen Matte (6) erstrecken.

9. Fahrzeugsitz nach einem der Ansprüche 1 bis 8,
**dadurch gekennzeichnet**, dass die Befestigungsvorrichtung (4) mit Hilfe von Federelementen (5) und/oder Draht über die randlichen Profilstegelemente (8) an dem Rahmenteil (1) aufgehängt ist.

10. Fahrzeugsitz nach einem der Ansprüche 1 bis 9,
**dadurch gekennzeichnet**, dass das Polsterteil (2) Haltemittel zum kraftformschlüssigen Verrasten mit den vom Sitz wegweisenden Rastklammern (28) der Klemmelemente (10) aufweist.

11. Fahrzeugsitz nach Anspruch 10,
**dadurch gekennzeichnet**, dass die Haltemittel des Polsterteils (2) durch Verstrebungen (32), vorzugsweise aus einem Kunststoffmaterial, gebildet sind.

12. Fahrzeugsitz nach Anspruch 11,
**dadurch gekennzeichnet**, dass die Verstrebungen (32) in einen Schaumkörper (34) des Polsterteils (2) teilweise eingeschäumt sind.

13. Fahrzeugsitz nach Anspruch 12,
**dadurch gekennzeichnet**, dass die Verstrebungen (32) im Bereich von nicht ausgeschäumten Ausnehmungen (36) angeordnet sind.

14. Fahrzeugsitz nach einem der Ansprüche 1 bis 13,
**dadurch gekennzeichnet**, dass die Profilstegelemente (8) elastisch verformbar sind und vorzugsweise jeweils aus einem insbesondere mit Polyurethan umschäumten, grobmaschigen Trägerprofil (14), vorzugsweise einem textilen Flächengebilde, bestehen.

15. Fahrzeugsitz nach einem der Ansprüche 1 bis 14,
**dadurch gekennzeichnet**, dass die gitterförmige Matte (6) aus einem Glasfasermaterial besteht.

16. Fahrzeugsitz nach einem der Ansprüche 1 bis 14,
**dadurch gekennzeichnet**, dass die gitterförmige Matte (6) aus einem Maschen- oder Gitterdraht, mit oder ohne Kunststoffbeschichtung, besteht.

17. Fahrzeugsitz nach einem der Ansprüche 2 bis 16,
**dadurch gekennzeichnet, dass** die Rastverbindungen zwischen den Klemmelementen (10) und den Profilstegelementen (8) fester sind als die Rastverbindungen zwischen den Klemmelementen (10) und den Haltemitteln des Posterteils (2).
